# EUROPÄISCHE PATENTSCHRIFT

(11) **EP 3 514 892 B1**
(45) Veröffentlichungstag und Bekanntmachung des Hinweises auf die Patenterteilung: **20.05.2020**
(21) Anmeldenummer: 18208607.4
(22) Anmeldetag: 27.11.2018
(51) Int. Cl.: H01R 13/64, H01R 13/71, H01R 13/625

(54) **STECKVERBINDUNG**
CONNECTOR
CONNECTEUR ENFICHABLE

(30) Priorität: 23.01.2018 DE 102018101431
(43) Veröffentlichungstag der Anmeldung: 24.07.2019
(60) Teilanmeldung: 19216920.9
(73) Patentinhaber: Neutrik AG, 9494 Schaan (LI)
(72) Erfinder: Dobler, Oliver, 6774 Tschagguns (AT)
(74) Vertreter: Fechner, Thomas

(56) Entgegenhaltungen:
- EP-A2- 2 209 171
- WO-A1-2019/138196
- US-A- 3 725 840
- US-A1- 2002 177 373
- US-B1- 6 394 856

## Beschreibung

Die vorliegende Erfindung betrifft eine Steckverbindung gemäß dem Oberbegriff des Patentanspruchs 1.

Steckverbindungen zur Übertragung von elektrischem Strom sind beim Stand der Technik bekannt und z.B. in den Gemeinschaftsgeschmacksmustern 001229827, insbesondere 001229827-0001 und -0006, 002677641, insbesondere 002677641-0001, und 001393623-0001 und -0002 gezeigt. Durch die Vorsprünge und die jeweils korrespondierenden Aufnahmeschlitze wird bei sachgerechter Bedienung beim Stand der Technik verhindert, dass nicht zusammengehörige Steckverbinder ineinander eingesteckt werden. Weiters wird sichergestellt, dass zusammengehörige Steckverbinder bei sachgemäßem Gebrauch nur in der vorgegebenen bzw. vorgesehenen Einsteckstellung ineinandergesteckt werden können.

Die Praxis zeigt allerdings, dass es durch unsachgemäßen Gebrauch, aber auch durch Abnutzung an den Vorsprüngen und/oder Aufnahmeschlitzen dazu kommen kann, dass die Steckverbinder in einer nicht vorgesehenen Stellung und/oder Kombination ineinandergesteckt werden. Hierdurch kann es passieren, dass versehentlich die elektrischen Kontakte mit hierfür nicht vorgesehenen elektrischen Gegenkontakten elektrisch kontaktiert, also elektrisch leitend verbunden werden. Dies kann sowohl zu einer Gefährdung der an die Steckverbinder angeschlossenen Kabel und Geräte als auch der diese Kabel und Geräte bzw. Steckverbinder bedienenden Personen führen.

Eine gattungsgemäße Steckverbindung mit zusätzlichem Formteil und Gegenformteil ist in der EP 2 209 171 A1 gezeigt.

Die Erfindung schlägt eine Steckverbindung gemäß Patentanspruch 1 vor.

Es ist bei der Erfindung somit vorgesehen, dass der männliche Steckverbinder im Einsteckfortsatzinnenraum zusätzlich zumindest ein Formteil und der weibliche Steckverbinder im Einsteckfortsatzaufnahmeinnenraum zusätzlich zumindest ein Gegenformteil aufweisen, wobei das Formteil und das Gegenformteil gemeinsam eine Sperrvorrichtung zur Verhinderung eines elektrischen Kontaktierens der elektrischen Kontakte mit den elektrischen Gegenkontakten bei einem Einstecken des Einsteckfortsatzes in die Einsteckfortsatzaufnahme ausgehend von einer, von der eindeutigen vorgegebenen Einsteckstellung abweichenden Stellung bilden.

Zusätzlich ist bei der Erfindung vorgesehen, dass der Einsteckfortsatz ausgehend von der vorgegebenen Einsteckstellung in der Einsteckrichtung in die Einsteckfortsatzaufnahme zum Erreichen einer vollständig eingesteckten Stellung einsteckbar ist und ausgehend von der vollständig eingesteckten Stellung um die Einsteckrichtung herum in eine Endstellung drehbar ist, wobei in der Endstellung die elektrischen Kontakte mit den elektrischen Gegenkontakten elektrisch kontaktiert sind. Die Einsteckrichtung fällt dabei günstigerweise mit den Längsmittelachsen des Einsteckfortsatzes und der Einsteckfortsatzaufnahme zusammen bzw. ist mit diesen koaxial ausgebildet. Bei diesen Ausgestaltungsformen der Erfindung ist somit vorgesehen, dass die genannte Endstellung, in der die elektrischen Kontakte mit den elektrischen Gegenkontakten elektrisch kontaktiert sind, erst dann erreicht wird, wenn ausgehend von der eindeutigen vorgegebenen Einsteckstellung zunächst ein linearer Einsteckvorgang in Einsteckrichtung stattfindet. Mit diesem linearen Einsteckvorgang wird die vollständig eingesteckte Stellung erreicht, aus der heraus der Einsteckfortsatz, vorzugsweise der gesamte männliche Steckverbinder, dann um die Einsteckrichtung herum in die Endstellung gedreht wird.

In diesem Zusammenhang ist es auch vorgesehen, dass in der Mantelwand, in der auch der Aufnahmeschlitz angeordnet ist, zumindest ein in einer Umfangsrichtung verlaufender und an den Aufnahmeschlitz anschließender Aufnahmekanal angeordnet ist, in dem der Vorsprung beim Drehen von der vollständig eingesteckten Stellung in die Endstellung geführt ist.

Durch das Formteil im Einsteckfortsatzinnenraum des männlichen Steckers und das Gegenformteil im Einsteckfortsatzaufnahmeinnenraum des weiblichen Steckverbinders wird somit eine zusätzliche Sicherungsmaßnahme bereitgestellt, welche verhindert, dass die elektrischen Kontakte des männlichen Steckverbinders versehentlich falsch mit den elektrischen Gegenkontakten des weiblichen Steckverbinders elektrisch leitend verbunden, also elektrisch kontaktiert werden. Sollte es bei männlichen und/oder weiblichen Steckverbindern erfindungsgemäßer Steckverbindungen durch Abrieb, Abnutzung oder sonstigen Verschleiß zu Beschädigungen oder gar zum vollständigen Verschwinden der Vorsprünge und/oder Aufnahmeschlitze kommen, sodass diese nicht mehr sicherstellen können, dass der männliche und der weibliche Steckverbinder ausschließlich ausgehend von der eindeutigen vorgegebenen Einsteckstellung, also in der eigentlich vorgesehenen Art und Weise, ineinandergesteckt werden können, so bilden das Formteil und das korrespondierende Gegenformteil immer noch eine zusätzliche Sicherungsmaßnahme, welche beim falschen Ineinanderstecken von weiblichem und männlichem Steckverbinder immer noch dafür sorgt, dass es zumindest nicht zu einem falschen elektrischen Kontaktieren der elektrischen Kontakte und der elektrischen Gegenkontakte kommt. Das Gleiche gilt, wenn die Steckverbinder vorsätzlich oder versehentlich, in der Regel unter entsprechender Gewaltanwendung, falsch ineinandergesteckt werden. Auch in diesem Fall kann durch das Zusammenwirken von Formteil und Gegenformteil zumindest ein falsches elektrisches Kontaktieren der elektrischen Kontakte mit den elektrischen Gegenkontakten verhindert werden.

In der Regel sind die Vorsprünge und/oder Aufnahmeschlitze am Einsteckfortsatz nach außen weisend, auf einer vom Einsteckfortsatzinnenraum wegweisenden Oberfläche bzw. Außenfläche der Einsteckfortsatzmantelwand angeordnet. Dies hat zur Folge, dass sie einem erhöhten Verschleiß ausgesetzt sind und dadurch beschädigt oder sogar ganz entfernt werden können. Das Anordnen des Formteils im Einsteckfortsatzinnenraum und des Gegenformteils im Einsteckfortsatzaufnahmeinnenraum hat den Vorteil, dass das Formteil und das Gegenformteil von der entsprechenden Einsteckfortsatzmantelwand bzw. der entsprechenden Einsteckfortsatzaufnahmemantelwand gegen äußere Einflüsse und insbesondere gegen Abrieb oder andere Beeinträchtigungen besonders gut geschützt ist bzw. sind, was zur sicheren Verhinderung eines elektrischen Kontaktierens der elektrischen Kontakte mit den jeweils falschen elektrischen Gegenkontakten weiter beiträgt. Der Vollständigkeit halber wird darauf hingewiesen, dass das elektrische Kontaktieren auch als elektrisch leitfähiges Miteinanderverbinden der elektrischen Kontakte mit den elektrischen Gegenkontakten bezeichnet werden könnte.

Mit erfindungsgemäßen Steckverbindungen wird allgemein gesprochen elektrischer Strom übertragen. Es kann sich dabei sowohl um eine elektrische Signalübertragung, bei der eher geringe elektrische Leistungen übertragen werden, als auch um eine elektrische Übertragung von Leistung mit entsprechend hohen Stromstärken und/oder Spannungen handeln. Erfindungsgemäße Steckverbindungen können also sowohl zur elektrischen Datenübertragung als auch zur elektrischen Leistungsübertragung z.B. zur Stromversorgung von elektrischen Geräten ausgelegt sein. Man könnte auch von Steckverbindungen zur Übertragung von elektrischer Energie und/oder elektrischen Signalen sprechen. Auch Mischformen davon sind möglich. Darüber hinaus müssen erfindungsgemäße Steckverbindungen auch nicht zwingend darauf beschränkt sein, nur elektrische Ströme und/oder Spannungen zu übertragen. In erfindungsgemäße Steckverbindungen kann zusätzlich z.B. auch eine optische Datenübertragung oder dergleichen integriert sein.

Sowohl beim männlichen Steckverbinder als auch beim weiblichen Steckverbinder der erfindungsgemäßen Steckverbindung kann es sich um Kabelstecker, also um Steckverbinder, welche direkt am Kabel angeschlossen werden, aber auch um sogenannte Chassisstecker, also Steckverbinder die an Gerätegehäusen angebracht werden, handeln. Der weibliche Steckverbinder könnte auch als Buchse bezeichnet werden.

Die Vorsprünge könnten auch als Erhebungen, die Aufnahmeschlitze könnten auch als Vertiefungen oder Eintiefungen oder Nuten bezeichnet werden. Die Vorsprünge können sowohl an der Einsteckfortsatzmantelwand als auch an der Einsteckfortsatzaufnahmemantelwand angeordnet sein und über diese hinausstehen. Sie können nach innen, also zum jeweiligen Innenraum aber auch nach außen weisen. Entsprechend können auch die Aufnahmeschlitze sowohl an der Einsteckfortsatzmantelwand als auch an der Einsteckfortsatzaufnahmemantelwand angebracht bzw. in die jeweilige Mantelwand eingebracht sein. Auch Mischformen sind denkbar. Es kann sich pro Mantelwand um einen, aber auch mehrere Vorsprünge und/oder Aufnahmeschlitze handeln. Im Folgenden wird in der Regel in der Einzahl von dem Vorsprung und dem Aufnahmeschlitz gesprochen. Dies ist aber nur eine sprachliche Vereinfachung. Es kann sich in allen nachfolgend geschilderten Ausführungsvarianten um einen oder mehrere Vorsprünge aber auch um einen oder mehrere Aufnahmeschlitze handeln. Die Vorsprünge und die dazu korrespondierenden Aufnahmeschlitze dienen dazu, dass der männliche Steckverbinder im unbeschädigten Zustand der Vorsprünge und Aufnahmeschlitze nur ausgehend von der eindeutigen, von dem Vorsprung und dem Aufnahmeschlitz vorgegebenen Einsteckstellung in der Einsteckrichtung in die Einsteckfortsatzaufnahme einsteckbar ist. Vereinfacht gesprochen sorgen die Vorsprünge und Aufnahmeschlitze im unbeschädigten Zustand und bei sachgerechter Handhabung also eigentlich dafür, dass es gar nicht zu einem falschen Einstecken des männlichen Steckverbinders in den weiblichen Steckverbinder kommt. Die Praxis hat allerdings, wie oben bereits geschildert, gezeigt, dass es durch Beschädigung, Abnutzung oder sonstige Beeinträchtigung von Vorsprüngen und Aufnahmeschlitzen aber auch durch unsachgemäße Handhabung dazu kommen kann, dass der Einsteckfortsatz des männlichen Steckverbinders ausgehend von einer falschen, von der eindeutigen vorgegebenen Einsteckstellung abweichenden Stellung in die Einsteckfortsatzaufnahme des weiblichen Steckverbinders eingesteckt werden kann. In diesem Fall verhindert das erfindungsgemäße Formteil in Zusammenwirkung mit dem entsprechenden Gegenformteil zumindest, dass der männliche Steckverbinder so weit in den weiblichen Steckverbinder eingeschoben werden kann, dass die elektrischen Kontakte und die elektrischen Gegenkontakte falsch miteinander verbunden werden. Die eindeutige, von dem Vorsprung und dem Aufnahmeschlitz vorgegebene Einsteckstellung wird hier kurz auch als eindeutige vorgegebene Einsteckstellung oder nur als vorgegebene Einsteckstellung bezeichnet.

Der zu einem jeweiligen Vorsprung korrespondierende Aufnahmeschlitz entspricht in seiner Ausformung und Lage so der Form und Position bzw. Lage des entsprechenden Vorsprungs, dass im unbeschädigten Zustand von Vorsprung und Aufnahmeschlitz und bei sachgerechter Anwendung ein Einstecken eben nur ausgehend von der eindeutigen vorgegebenen Einsteckstellung aus möglich ist.

Der Begriff der elektrischen Gegenkontakte wird lediglich zur Klarstellung verwendet, dass es sich hierbei um die elektrischen Kontaktelemente des weiblichen Steckverbinders handelt. Weder der Begriff der elektrischen Kontakte des männlichen Steckverbinders noch der der elektrischen Gegenkontakte des weiblichen Steckverbinders sagt irgendetwas über die Anzahl und physische Ausgestaltung der jeweiligen elektrischen Kontaktelemente aus. Diese kann sehr verschieden und entsprechend korrespondierend zueinander ausgebildet sein. Sowohl die Anzahl der elektrischen Kontakte des männlichen Steckverbinders als auch die Anzahl der elektrischen Gegenkontakte des weiblichen Steckverbinders können variieren. Es kann sich um ein, zwei, drei oder mehr elektrische Kontakte und entsprechend auch um ein, zwei, drei oder mehr elektrische Gegenkontakte handeln. Besonders bevorzugt sind drei elektrische Kontakte und entsprechend drei elektrische Gegenkontakte. In der Regel entspricht bei erfindungsgemäßen Steckverbindungen die Anzahl der elektrischen Kontakte des männlichen Steckverbinders der Anzahl der elektrischen Gegenkontakte des weiblichen Steckverbinders.

Bevorzugte Ausgestaltungsformen der Erfindung sehen vor, dass das Formteil zumindest eine Anschlagfläche und das Gegenformteil zumindest eine Gegenanschlagfläche aufweisen, wobei zur Ausbildung der Sperrvorrichtung die Anschlagfläche und die Gegenanschlagfläche beim Einstecken des Einsteckfortsatzes in der Einsteckrichtung in die Einsteckfortsatzaufnahme ausgehend von einer von der eindeutigen vorgegebenen Einsteckstellung abweichenden Stellung aneinander anschlagen und zur Verhinderung des elektrischen Kontaktierens der elektrischen Kontakte mit den elektrischen Gegenkontakten ein vollständiges Einstecken des Einsteckfortsatzes in der Einsteckrichtung in die Einsteckfortsatzaufnahme verhindern.

Bei der Verwendung der Begriffe Formteil und Gegenformteil wie auch Anschlagfläche und Gegenanschlagfläche handelt es sich, wie bei den elektrischen Kontakten und den elektrischen Gegenkontakten ebenfalls letztendlich um eine Konvention, die lediglich dazu dient, die sprachliche Zuordnung zum männlichen bzw. weiblichen Steckverbinder zu vereinfachen und zu vereinheitlichen. Diese Begriffe sagen daher noch nichts über die konkrete Ausgestaltung und Anordnung im jeweiligen Steckverbinder aus.

Besonders bevorzugte Ausgestaltungsformen der Erfindung sehen vor, dass das Formteil zentral im Einsteckfortsatzinnenraum, vorzugsweise auf einer Längsmittelachse des Einsteckfortsatzes, angeordnet ist. Bevorzugt befindet sich das Formteil zwischen den elektrischen Kontakten im Einsteckfortsatzinnenraum. Analoges gilt günstigerweise auch für den weiblichen Steckverbinder. Auch das Gegenformteil ist also günstigerweise zentral im Einsteckfortsatzaufnahmeinnenraum, vorzugsweise auf einer Längsmittelachse der Einsteckfortsatzaufnahme, angeordnet. Bevorzugt befindet sich das Gegenformteil auch zwischen den elektrischen Gegenkontakten.

Wie eingangs bereits erläutert, können bei erfindungsgemäßen Steckverbindungen und ihren männlichen und weiblichen Steckverbindern jeweils nur ein Vorsprung und nur ein korrespondierender Aufnahmeschlitz pro jeweiliger Mantelwand aber eben auch mehrere Vorsprünge und mehrere Aufnahmeschlitze vorgesehen sein. Es ist somit im Rahmen der Erfindung möglich, dass an einer Mantelwand, welche die Einsteckfortsatzmantelwand oder die Einsteckfortsatzaufnahmemantelwand ist, mehrere, vorzugsweise vier, voneinander verschieden ausgeformte und/oder an voneinander verschiedenen Positionen angeordnete Vorsprünge angeordnet sind und die andere dieser Mantelwände eine zu den Vorsprüngen korrespondierende Anzahl von voneinander verschieden ausgeformten und/oder an voneinander verschiedenen Positionen angeordneten Aufnahmeschlitzen aufweist. Sowohl das Formteil als auch das dazu korrespondierende Gegenformteil können sehr unterschiedlich ausgeformt sein, um die erfindungsgemäße Sperrvorrichtung und ihre Funktion darzustellen. Bevorzugte Varianten sehen vor, dass ein Teil, welches das Formteil oder das Gegenformteil ist, zumindest einen Freiraum aufweist, in welchen das andere dieser Teile beim Einstecken des Einsteckfortsatzes in der Einsteckrichtung in die Einsteckfortsatzaufnahme ausgehend von der vorgegebenen Einsteckstellung eindringt. Der Freiraum kann somit sowohl am Formteil als auch am Gegenformteil ausgebildet sein. Das jeweils andere Teil, also dann eben entsprechend das Gegenformteil oder das Formteil, kann beim Einstecken des Einsteckfortsatzes ausgehend von der eindeutigen vorgegebenen Einsteckstellung dann entsprechend in diesen Freiraum eindringen. In einer Draufsicht, insbesondere in Einsteckrichtung gesehen, kann der Freiraum V-förmig ausgebildet sein. Es kann sich auch um mehrere, z.B. zwei einander gegenüberliegende Freiräume handeln. Günstigerweise ist das in den Freiraum oder die Freiräume eindringende Teil, also dann entsprechend das Formteil oder das Gegenformteil, im Freiraum drehbar gelagert, besonders bevorzugt drehbar zwischen zwei Drehanschlägen gelagert.

Es ist günstig, wenn die, vorzugsweise alle, elektrischen Kontakte auf einer gemeinsamen Kreisbahn der elektrischen Kontakte angeordnet sind und/oder dass die, vorzugsweise alle, elektrischen Gegenkontakte auf einer gemeinsamen Kreisbahn der elektrischen Gegenkontakte angeordnet sind. Bevorzugt ist auch vorgesehen, dass eine Außenfläche der Einsteckfortsatzmantelwand und/oder eine Innenfläche der Einsteckfortsatzaufnahmemantelwand abgesehen von dort angeordneten Vorsprüngen oder Aufnahmeschlitzen und/oder dort angeordneten Aufnahmekanälen zumindest bereichsweise kreiszylindermantelförmig ausgebildet ist bzw. sind.

Weitere bevorzugte Ausgestaltungsformen erfindungsgemäßer Steckverbindungen werden beispielhaft in der nachfolgenden Figurenbeschreibung anhand eines erfindungsgemäßen Ausführungsbeispiels erläutert. Es zeigen:
Fig. 1 bis 3 Ansichten eines männlichen Steckverbinders einer erfindungsgemäßen Steckverbindung;
Fig. 4 bis 6 Ansichten eines weiblichen Steckverbinders der erfindungsgemäßen Steckverbindung;
Fig. 7 einen Längsschnitt durch die Steckverbindung mit diesem männlichen und diesem weiblichen Steckverbinder in der vollständig eingesteckten Stellung entlang der Schnittlinie CC aus Fig. 8;
Fig. 8 den Querschnitt entlang der Schnittlinie AA aus Fig. 7;
Fig. 9 den Querschnitt entlang der Schnittlinie BB aus Fig. 8;
Fig. 10 das Detail D aus Fig. 8;
Fig. 11 einen Längsschnitt durch diese Steckverbindung in der Endstellung, in der die elektrischen Kontakte mit den elektrischen Gegenkontakten elektrisch kontaktiert sind, entlang der Schnittlinie GG aus Fig. 12;
Fig. 12 den Querschnitt entlang der Schnittlinie EE aus Fig. 11;
Fig. 13 den Querschnitt entlang der Schnittlinie FF aus Fig. 11;
Fig. 14 das Detail H aus Fig. 12 vergrößert;
Fig. 15 einen Längsschnitt durch die Steckverbindung, wobei allerdings der männliche Steckverbinder ausgehend von einer von der eindeutigen vorgesehenen Einsteckstellung abweichenden Stellung eingesteckt wurde, entlang der Schnittlinie KK aus Fig. 16;
Fig. 16 den Querschnitt entlang der Schnittlinie II aus Fig. 15;
Fig. 17 den Querschnitt entlang der Schnittlinie JJ aus Fig. 15 und
Fig. 18 das Detail L aus Fig. 16, vergrößert.

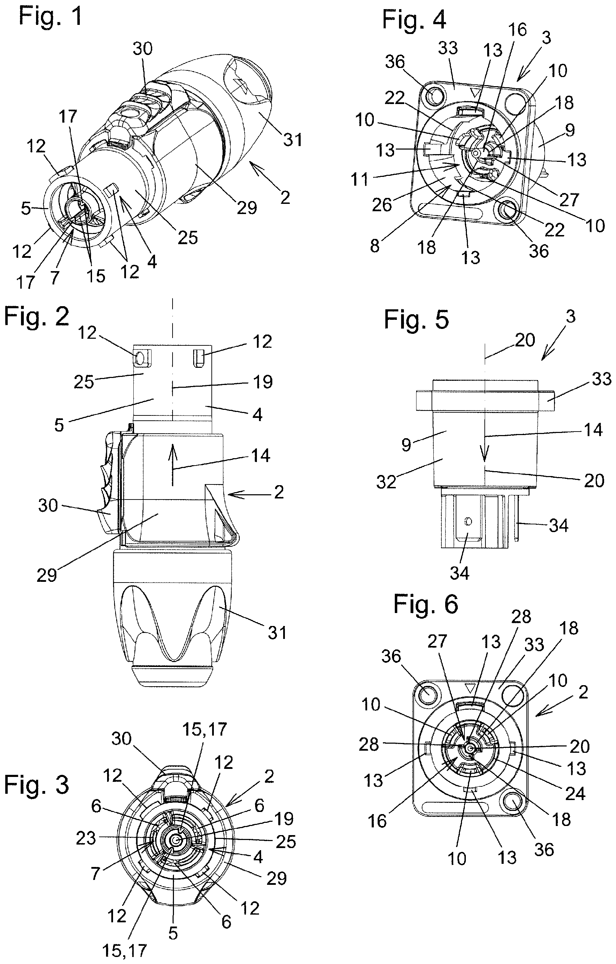

Der hier beispielhaft gezeigte männliche Steckverbinder 2 der erfindungsgemäßen Steckverbindung 1 ist in diesem Beispiel ein Kabelstecker und in Fig. 1 in einer Perspektive und in Fig. 2 in einer Seitenansicht dargestellt. Fig. 3 zeigt eine Ansicht in Richtung in den Einsteckfortsatz 4 dieses männlichen Steckverbinders 2 hinein. Der korrespondierende weibliche Steckverbinder 3 ist als sogenannte Chassisbuchse bzw. als sogenannter Chassisstecker ausgebildet, welcher dazu vorgesehen ist, am Gehäuse eines Elektrogerätes befestigt zu werden. Natürlich könnte ein erfindungsgemäßer weiblicher Steckverbinder 3 so wie der hier gezeigte männliche Steckverbinder 2 auch als Kabelstecker ausgeführt sein, ohne dass hierdurch etwas an den erfindungswesentlichen Bauteilen geändert werden müsste. Dies gilt andersherum auch für den männlichen Steckverbinder 2. Auch dieser könnte grundsätzlich als ein Chassisstecker ausgeführt sein. Der hier gezeigte weibliche Steckverbinder 3 kann mittels der Befestigungslöcher 36 im Flansch 33 in an sich bekannter Art und Weise am Gehäuse des Elektrogerätes angeschraubt bzw. anderweitig befestigt werden. Fig. 4 zeigt eine perspektivische Ansicht auf diesen weiblichen Steckverbinder 3, Fig. 5 eine Seitenansicht. Fig. 6 zeigt einen Blick in den Einsteckfortsatzaufnahmeinnenraum 11 dieses weiblichen Steckverbinders 3 bzw. dessen Einsteckfortsatzaufnahme 8.

Der männliche Steckverbinder 2 weist, wie an sich bekannt, ein Gehäuse 29 auf, über das der Einsteckfortsatz 4 übersteht. Auf der dem Einsteckfortsatz 4 entgegengesetzten Seite befindet sich die Kabeltülle 31, durch die hindurch ein elektrisches Kabel in den männlichen Steckverbinder 2 in an sich bekannter Art und Weise eingeführt und dort an den elektrischen Kontakten 6 des Einsteckfortsatzes 4 bzw. männlichen Steckverbinders 2 kontaktiert werden kann. Im gezeigten Ausführungsbeispiel befindet sich außen am Gehäuse 29 des männlichen Steckverbinders 2 auch ein an sich bekannter Schieber 30, welcher zum Lösen einer wie beim Stand der Technik ausgebildeten Verriegelung vorgesehen ist. Das Gehäuse 29, die Kabeltülle 31 und der Schieber 30 sind letztendlich nicht erfindungsrelevant und können ebenso wie das Innenleben des Gehäuses 29 und der Kabeltülle 31, wie beim Stand der Technik an sich bekannt, ausgeführt sein.

Der Einsteckfortsatz 4 weist eine Einsteckfortsatzmantelwand 5 auf, welche im gezeigten Ausführungsbeispiel, abgesehen von den daran angeordneten und nach außen stehenden Vorsprüngen 12 kreiszylindermantelförmig ausgebildet ist, also insbesondere eine kreiszylindermantelförmige Außenfläche 25 aufweist. Im gezeigten Ausführungsbeispiel sind an dieser Außenfläche 25 insgesamt 4 Vorsprünge 12 nach außen abstehend angeordnet. Diese vier Vorsprünge 12 unterscheiden sich in ihrer Form und auch in ihrer Position. Wie bereits eingangs ausgeführt, können es auch mehr oder weniger und anders ausgeformte und auch anders eingeordnete Vorsprünge 12 sein. Genauso gut könnten sich in der Einsteckfortsatzmantelwand 5 auch entsprechende Aufnahmeschlitze 13 befinden, wenn die entsprechenden Vorsprünge 12 in der Einsteckfortsatzaufnahmemantelwand 9 des Einsteckfortsatzes 4 des weiblichen Steckverbinders 3 ausgebildet wären. Auch Mischformen, bei denen sowohl Vorsprünge 12 als auch Aufnahmeschlitze 13 sowohl an der Einsteckfortsatzmantelwand 5 als auch an der Einsteckfortsatzaufnahmemantelwand 9 angeordnet sind, sind denkbar.

Die Einsteckfortsatzmantelwand 5 umgibt jedenfalls den Einsteckfortsatzinnenraum 7, in dem sich die elektrischen Kontakte 6 befinden. Die Einsteckfortsatzmantelwand 5 ist, wie im hier gezeigten Ausführungsbeispiel, günstigerweise so lang ausgeführt, dass die elektrischen Kontakte 6 im Einsteckfortsatzinnenraum 7 vollständig versenkt angeordnet sind und über diesen nicht überstehen. Bei dem Blick gemäß Fig. 3 in den Einsteckfortsatzinnenraum 7 hinein, sind die versenkt angeordneten elektrischen Kontakte 6 gut zu erkennen. Zu sehen ist auch, dass diese in diesem Ausführungsbeispiel auf einer gemeinsamen Kreisbahn 23 angeordnet sind. Zentral im Einsteckfortsatzinnenraum 7 ist erfindungsgemäß das Formteil 15 mit seinen nach außen weisenden Anschlagflächen 17 angeordnet. Die Form und Funktion dieses Formteils 15 und insbesondere seine Wechselwirkung mit dem Gegenformteil 16 des weiblichen Steckverbinders 3 wird nachfolgend noch genauer erläutert. Das zentral angeordnete Formteil 15 liegt hier auf der Längsmittelachse 19 des Einsteckfortsatzes 4 und zwischen den elektrischen Kontakten 6.

Die Einsteckfortsatzaufnahmemantelwand 9 der Einsteckfortsatzaufnahme 8 umgibt den Einsteckfortsatzaufnahmeinnenraum 11, in welchem die elektrischen Gegenkontakte 10 angeordnet sind. Auch diese elektrischen Gegenkontakte 10 sind in diesem Ausführungsbeispiel alle auf einer gemeinsamen Kreisbahn 24 angeordnet und im Einsteckfortsatzaufnahmeinnenraum 11 versenkt angeordnet. Die Außenkontakte 34, welche mit den elektrischen Gegenkontakten 10 in leitfähiger Verbindung stehen, dienen dem Anschluss von Kabeln oder dergleichen und stehen hinten, also auf der vom Flansch 33 abgewandten Seite über das Gehäuse 32 des weiblichen Steckverbinders 3 über. Zentral im Einsteckfortsatzaufnahmeinnenraum 11 ist auch das erfindungsgemäße Gegenformteil 16 mit seinen beiden Gegenanschlagflächen 18, den beiden Freiräumen 27 und den Drehanschlägen 28 angeordnet. Durch das Gegenformteil 16 hindurch verläuft auch die Längsmittelachse 20 der Einsteckfortsatzaufnahme 8. Die Einsteckfortsatzaufnahmemantelwand 9 weist eine kreiszylinderförmige Innenfläche 26 auf, welche in diesem Ausführungsbeispiel durch die Aufnahmeschlitze 13 durchbrochen ist. An jeden Aufnahmeschlitz 13 schließt ein ebenfalls in der Einsteckfortsatzaufnahmemantelwand 9 angeordneter, die Innenfläche 26 durchbrechender Aufnahmekanal 22 an.

Bei einer sachgerechten Anwendung wird der männliche Steckverbinder 2 mit seinem Einsteckfortsatz 4 ausgehend von der eindeutigen, von den Vorsprüngen 12 und den korrespondierenden Aufnahmeschlitzen 13 vorgegebenen Einsteckstellung in der Einsteckrichtung 14 in die Einsteckfortsatzaufnahme 8 eingesteckt. Hierdurch kann bei einem entsprechend weiten Einschieben des Einsteckfortsatzes 4 in die Einsteckfortsatzaufnahme 8 in Einsteckrichtung 14 die vollständig eingesteckte Stellung erreicht werden, in der die elektrischen Kontakte 6 in diesem Ausführungsbeispiel aber noch nicht mit den elektrischen Gegenkontakten 10 elektrisch leitend verbunden bzw. kontaktiert sind. Um die Endstellung, in der dies der Fall ist, zu erreichen, muss der Einsteckfortsatz 4 zunächst noch von der vollständig eingesteckten Stellung ausgehend in Umfangsrichtung 21 gedreht werden, erst dann kommt es in diesem Ausführungsbeispiel zu einem elektrischen Kontaktieren der elektrischen Kontakte 6 mit den elektrischen Gegenkontakten 10.

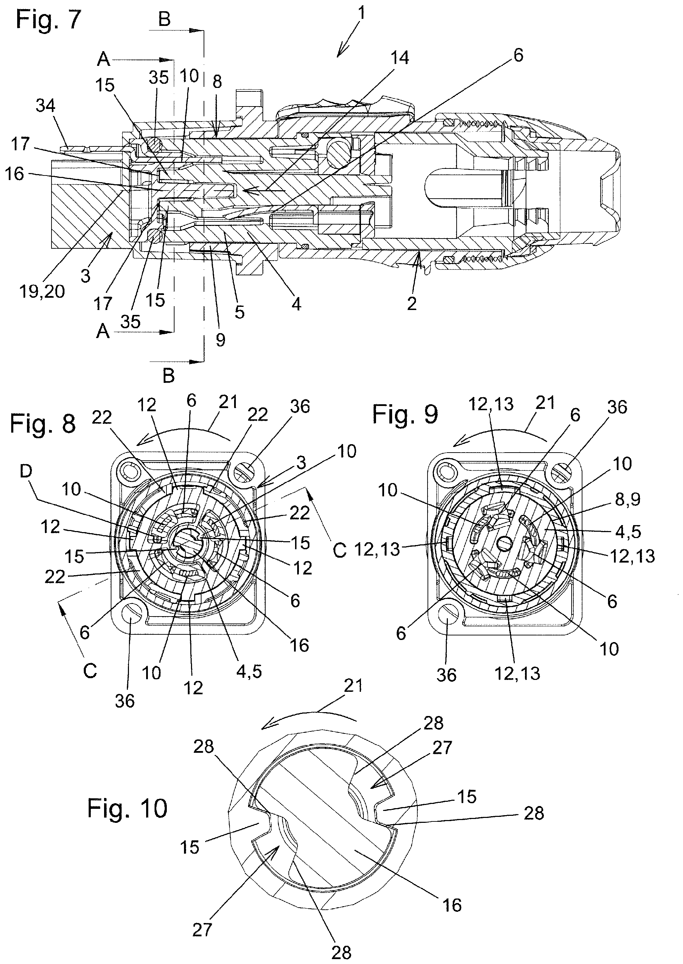

In den Fig. 7 bis 10 ist die vollständig eingesteckte Stellung gezeigt, in der noch keine elektrische Kontaktierung zwischen den elektrischen Kontakten 6 und den elektrischen Gegenkontakten 10 erfolgt ist. Letzteres ist besonders gut in Fig. 9 zu erkennen. In den Fig. 7, 8 und 10 ist auch gut zu sehen, dass bei diesem Einsteckvorgang, ausgehend von der durch die unbeschädigten Vorsprünge 12 und die korrespondierenden Aufnahmeschlitze 13 vorgegebenen eindeutigen Einsteckstellungen die Nasen des Formteils 15 des Einsteckfortsatzes 4 jeweils in einen der hier V-förmig ausgebildeten Freiräume 27 des Gegenformteils 16 eingedrungen sind, sodass auch die Anschlagflächen 17 des Formteils 15 beim Einsteckvorgang nicht mit den Gegenanschlagflächen 18 des Gegenformteils 16 kollidiert bzw. in Wirkverbindung getreten sind.

In dem hier gezeigten Ausführungsbeispiel der Steckverbindung 1 befindet sich eine an sich bekannte Dichtung 35 im Einsteckfortsatzaufnahmeraum 8 des weiblichen Steckverbinders 3. Gegen diese Dichtung 35 wird das vordere Ende der Einsteckfortsatzmantelwand 5 in der vollständig eingesteckten Stellung gedrückt.

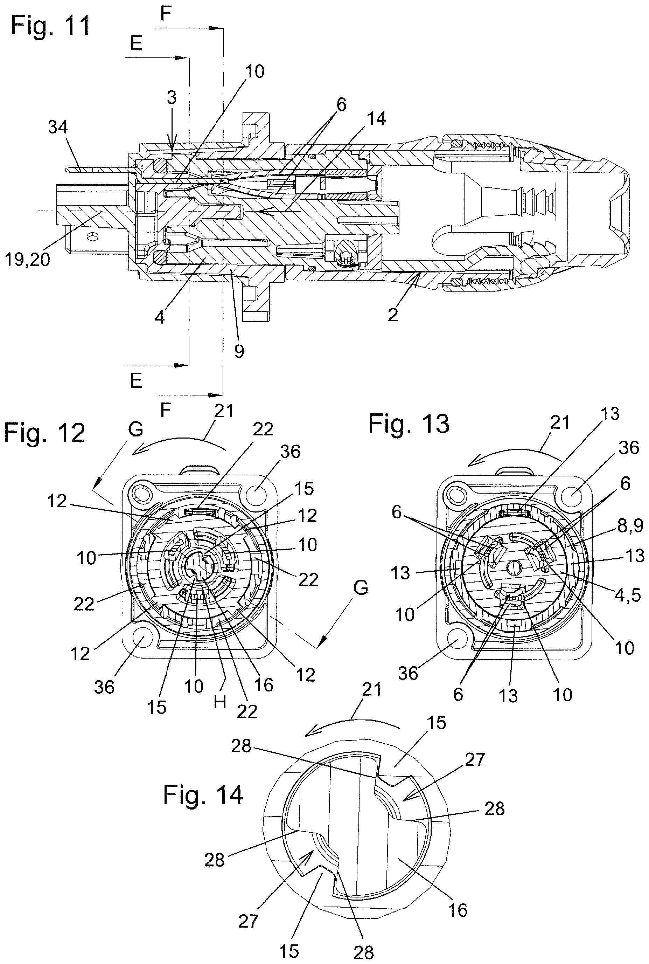

Zum Erreichen der Endstellung gemäß der Fig. 11 bis 14 und damit zum elektrischen Kontaktieren der elektrischen Kontakte 6 mit den elektrischen Gegenkontakten 10 wird der Einsteckfortsatz 4 bzw. der gesamte männliche Steckverbinder 2 ausgehend von der vollständig eingesteckten Stellung gemäß der Fig. 7 bis 10 in Umfangsrichtung 21 gedreht. Dabei werden die Vorsprünge 12 des Einsteckfortsatzes in den Aufnahmekanälen 22 der Einsteckfortsatzaufnahmemantelwand 9 geführt. In der in den Fig. 11 bis 14 gezeigten Endstellung sind dann die elektrischen Kontakte 6 mit den elektrischen Gegenkontakten 10 elektrisch leitend verbunden, wie dies besonders gut in den Fig. 11 und 13 zu sehen ist. In den Fig. 12 und insbesondere 14 ist gut zu sehen, dass durch diese Drehbewegung in Umfangsrichtung 21 die Nasen des Formteils 15 und damit das Formteil 15 an sich in den Freiräumen 27 des Gegenformteils 16 von einem Drehanschlag 28, siehe Fig. 10, zum anderen Drehanschlag 28, siehe Fig. 14, gedreht wurde. Diese Drehanschläge 28 können als zusätzliche Begrenzung der Drehbewegung in Umfangsrichtung 21 eingesetzt werden, müssen aber nicht zwingend vorhanden sein.

Anhand der Fig. 1 bis 14 wurde bislang die sachgemäße Verwendung der erfindungsgemäßen Steckverbindung 1 beschrieben, bei welcher sich die Vorsprünge 12 und die korrespondierenden Aufnahmeschlitze 13 in einem unbeschädigten Zustand befinden und die eindeutige Einsteckstellung vorgeben.

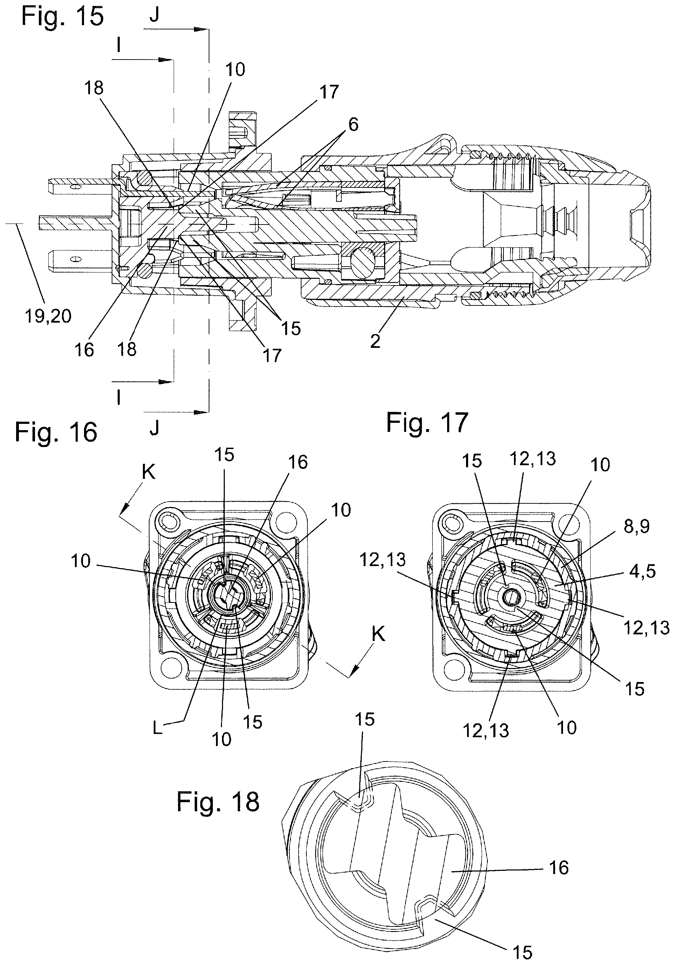

Wie eingangs erläutert, sind Fälle aufgetreten, bei denen durch Beschädigung, Abrieb oder dergleichen die Vorsprünge 12 und/oder die Aufnahmeschlitze 13 beschädigt wurden, sodass hierdurch oder durch schlichtweg unsachgemäße Verwendung ein Einsteckvorgang des Einsteckfortsatzes 4 in die Einsteckfortsatzaufnahme 8 ausgehend von einer von der eindeutigen vorgegebenen Einsteckstellung abweichenden Stellung durchgeführt wurde. In den Fig. 15 bis 18 ist nun gezeigt, wie in einem solchen Fall durch das Zusammenwirken des erfindungsgemäßen Formteils 15 mit dem erfindungsgemäßen Gegenformteil 16 eine Sperrvorrichtung gebildet wird, welche verhindert, dass die elektrischen Kontakte 6 mit den elektrischen Gegenkontakten 10 elektrisch leitend verbunden bzw. elektrisch kontaktiert werden. In den Fig. 15, 16 und 18 ist gut zu sehen, wie bei diesem Einsteckvorgang die Anschlagflächen 17 des Formteils 15 an den Gegenanschlagflächen 18 des Gegenformteils 16 anschlagen, bevor es zu einem elektrischen Verbinden bzw. Kontaktieren der elektrischen Kontakte 6 mit den falschen elektrischen Gegenkontakten 10 kommen kann. Das Zusammenwirken von Formteil 15 und Gegenformteil 16 bzw. ihrer Anschläge 17 mit den Gegenanschlägen 18 verhindert somit ein elektrisches Kontaktieren der elektrischen Kontakte 6 mit den elektrischen Gegenkontakten 10, da der Einsteckfortsatz 4 in der Einsteckrichtung 14 nicht vollständig in die Einsteckfortsatzaufnahme 8 eingesteckt werden kann. Dies ist besonders gut in Fig. 15 zu sehen, indem dort, wenn die Anschlagflächen 17 bereits an den Gegenanschlagflächen 8 anliegen, die elektrischen Kontakte 6 immer noch von den elektrischen Gegenkontakten 10 entfernt angeordnet sind und so mit diesen nicht in elektrisch leitende Verbindung treten können.

**Legende zu den Hinweisziffern:**

| | | | |
|---|---|---|---|
| 1 | Steckverbindung | 18 | Längsmittelachse |
| 2 | männlicher Steckverbinder | 20 | Längsmittelachse |
| 3 | weiblicher Steckverbinder | 21 | Umfangsrichtung |
| 4 | Einsteckfortsatz | 22 | Aufnahmekanal |
| 5 | Einsteckfortsatzmantelwand | 23 | gemeinsame Kreisbahn |
| 6 | elektrischer Kontakt | 24 | gemeinsame Kreisbahn |
| 7 | Einsteckfortsatzinnenraum | 25 | Außenfläche |
| 8 | Einsteckfortsatzaufnahme | 26 | Innenfläche |
| 9 | Einsteckfortsatzaufnahmemantelwand | 27 | Freiraum |
| 10 | elektrischer Gegenkontakt | 28 | Drehanschlag |
| 11 | Einsteckfortsatzaufnahmeinnenraum | 29 | Gehäuse |
| 12 | Vorsprung | 30 | Schieber |
| 13 | Aufnahmeschlitz | 31 | Kabeltülle |
| 14 | Einsteckrichtung | 32 | Gehäuse |
| 15 | Formteil | 33 | Flansch |
| 16 | Gegenformteil | 34 | Außenkontakt |
| 17 | Anschlagfläche | 35 | Dichtung |
| | | 36 | Befestigungsloch |

## Patentansprüche

1. Steckverbindung (1) zur Übertragung von elektrischem Strom mit einem männlichen Steckverbinder (2) und einem weiblichen Steckverbinder (3), wobei der männliche Steckverbinder (2) einen Einsteckfortsatz (4) mit einer Einsteckfortsatzmantelwand (5) und elektrischen Kontakten (6) aufweist, wobei in einem von der Einsteckfortsatzmantelwand (5) umgebenen Einsteckfortsatzinnenraum (7) die elektrischen Kontakte (6) angeordnet sind, und der weibliche Steckverbinder (3) eine Einsteckfortsatzaufnahme (8) mit einer Einsteckfortsatzaufnahmemantelwand (9) und elektrischen Gegenkontakten (10) aufweist, wobei in einem von der Einsteckfortsatzaufnahmemantelwand (9) umgebenen Einsteckfortsatzaufnahmeinnenraum (11) die elektrischen Gegenkontakte (10) angeordnet sind, wobei an einer Mantelwand, welche die Einsteckfortsatzmantelwand (5) oder die Einsteckfortsatzaufnahmemantelwand (9) ist, zumindest ein Vorsprung (12) angeordnet ist und die andere dieser Mantelwände zumindest einen, zu dem Vorsprung (12) korrespondierenden Aufnahmeschlitz (13) aufweist, wobei in einem unbeschädigten Zustand des Vorsprungs (12) und des Aufnahmeschlitzes (13) der Einsteckfortsatz (4) ausschließlich ausgehend von einer eindeutigen, von dem Vorsprung (12) und dem Aufnahmeschlitz (13) vorgegebenen Einsteckstellung in einer Einsteckrichtung (14) in die Einsteckfortsatzaufnahme (8) einsteckbar ist, und der männliche Steckverbinder (2) im Einsteckfortsatzinnenraum (7) zusätzlich zumindest ein Formteil (15) und der weibliche Steckverbinder (3) im Einsteckfortsatzaufnahmeinnenraum (11) zusätzlich zumindest ein Gegenformteil (16) aufweisen, wobei das Formteil (15) und das Gegenformteil (16) gemeinsam eine Sperrvorrichtung zur Verhinderung eines elektrischen Kontaktierens der elektrischen Kontakte (6) mit den elektrischen Gegenkontakten (10) bei einem Einstecken des Einsteckfortsatzes (4) in die Einsteckfortsatzaufnahme (8) ausgehend von einer, von der eindeutigen vorgegebenen Einsteckstellung abweichenden Stellung bilden, **dadurch gekennzeichnet, dass** der Einsteckfortsatz (4) ausgehend von der eindeutigen vorgegebenen Einsteckstellung in der Einsteckrichtung (14) in die Einsteckfortsatzaufnahme (8) zum Erreichen einer vollständig eingesteckten Stellung einsteckbar ist und ausgehend von der vollständig eingesteckten Stellung um die Einsteckrichtung (14) herum in eine Endstellung drehbar ist, wobei in der Endstellung die elektrischen Kontakte (6) mit den elektrischen Gegenkontakten (10) elektrisch kontaktiert sind, wobei in der Mantelwand, in der auch der Aufnahmeschlitz (13) angeordnet ist, zumindest ein in einer Umfangsrichtung (21) verlaufender und an den Aufnahmeschlitz (13) anschließender Aufnahmekanal (22) angeordnet ist, in dem der Vorsprung (12) beim Drehen von der vollständig eingesteckten Stellung in die Endstellung geführt ist.

2. Steckverbindung (1) nach Anspruch 1, **dadurch gekennzeichnet, dass** das Formteil (15) zumindest eine Anschlagfläche (17) und das Gegenformteil (16) zumindest eine Gegenanschlagfläche (18) aufweisen, wobei zur Ausbildung der Sperrvorrichtung die Anschlagfläche (17) und die Gegenanschlagfläche (18) beim Einstecken des Einsteckfortsatzes (4) in der Einsteckrichtung in die Einsteckfortsatzaufnahme (8) ausgehend von einer von der eindeutigen vorgegebenen Einsteckstellung abweichenden Stellung aneinander anschlagen und zur Verhinderung des elektrischen Kontaktierens der elektrischen Kontakte (6) mit den elektrischen Gegenkontakten (10) ein vollständiges Einstecken des Einsteckfortsatzes (4) in der Einsteckrichtung (14) in die Einsteckfortsatzaufnahme (8) verhindern.

3. Steckverbindung (1) nach Anspruch 1 oder 2, **dadurch gekennzeichnet, dass** das Formteil (15) zentral im Einsteckfortsatzinnenraum (7), vorzugsweise auf einer Längsmittelachse (19) des Einsteckfortsatzes (4), und/oder zwischen den elektrischen Kontakten (6) angeordnet ist.

4. Steckverbindung (1) nach einem der Ansprüche 1 bis 3, **dadurch gekennzeichnet, dass** das Gegenformteil (16) zentral im Einsteckfortsatzaufnahmeinnenraum (11), vorzugsweise auf einer Längsmittelachse (20) der Einsteckfortsatzaufnahme (8), und/oder zwischen den elektrischen Gegenkontakten (10) angeordnet ist.

5. Steckverbindung (1) nach einem der Ansprüche 1 bis 4, **dadurch gekennzeichnet, dass** an einer Mantelwand, welche die Einsteckfortsatzmantelwand (5) oder die Einsteckfortsatzaufnahmemantelwand (9) ist, mehrere, vorzugsweise vier, voneinander verschieden ausgeformte und/oder an voneinander verschiedenen Positionen angeordnete Vorsprünge (12) angeordnet sind und die andere dieser Mantelwände eine zu den Vorsprüngen (12) korrespondierende Anzahl von voneinander verschieden ausgeformten und/oder an voneinander verschiedenen Positionen angeordneten Aufnahmeschlitzen (13) aufweist.

6. Steckverbindung (1) nach einem der Ansprüche 1 bis 5, **dadurch gekennzeichnet, dass** die, vorzugsweise alle, elektrischen Kontakte (6) auf einer gemeinsamen Kreisbahn (23) der elektrischen Kontakte (6) angeordnet sind und/oder dass die, vorzugsweise alle, elektrischen Gegenkontakte (10) auf einer gemeinsamen Kreisbahn (24) der elektrischen Gegenkontakte (10) angeordnet sind.

7. Steckverbindung (1) nach einem der Ansprüche 1 bis 6, **dadurch gekennzeichnet, dass** eine Außenfläche (25) der Einsteckfortsatzmantelwand (5) und/oder eine Innenfläche (26) der Einsteckfortsatzaufnahmemantelwand (9) abgesehen von dort angeordneten Vorsprüngen (12) oder Aufnahmeschlitzen (13) und/oder dort angeordneten Aufnahmekanälen (22) zumindest bereichsweise kreiszylindermantelförmig ausgebildet ist bzw. sind.

8. Steckverbindung (1) nach einem der Ansprüche 1 bis 7, **dadurch gekennzeichnet, dass** ein Teil, welches das Formteil (15) oder das Gegenformteil (16) ist, zumindest einen, vorzugsweise in einer Draufsicht gesehen V-förmigen, Freiraum (27) aufweist, in welchen das andere dieser Teile beim Einstecken des Einsteckfortsatzes (4) in der Einsteckrichtung (14) in die Einsteckfortsatzaufnahme (8) ausgehend von der eindeutigen vorgegebenen Einsteckstellung eindringt, wobei vorzugsweise vorgesehen ist, dass das in den Freiraum (27) eindringende Teil im Freiraum (27) zwischen zwei Drehanschlägen (28) drehbar ist.

## Claims

1. Plug-in connection (1) for transmitting electrical current, comprising a male connector (2) and a female connector (3), wherein the male connector (2) has a plug-in extension (4) having a plug-in extension casing wall (5) and electrical contacts (6), wherein the electrical contacts (6) are arranged in a plug-in extension interior (7) which is enclosed by the plug-in extension casing wall (5), and the female connector (3) has a plug-in extension socket (8) having a plug-in extension socket casing wall (9) and mating electrical contacts (10), wherein the mating electrical contacts (10) are arranged in a plug-in extension socket interior (11) which is enclosed by the plug-in extension socket casing wall (9), wherein at least one protrusion (12) is arranged on one casing wall, which is the plug-in extension casing wall (5) or the plug-in extension socket casing wall (9), and the other of said casing walls has at least one receiving slot (13) corresponding to the protrusion (12), wherein, in an undamaged state of the protrusion (12) and of the receiving slot (13), the plug-in extension (4) can be plugged into the plug-in extension socket (8) in a plug-in direction (14) starting only from an unequivocal plug-in position which is predefined by the protrusion (12) and the receiving slot (13), and the male connector (2) additionally has at least one shaped part (15) in the plug-in extension interior (7), and the female connector (3) additionally has at least one mating shaped part (16) in the plug-in extension socket interior (11), wherein the shaped part (15) and the mating shaped part (16) together form a blocking device to prevent electrical contacting of the electrical contacts (6) with the mating electrical contacts (10) when the plug-in extension (4) is plugged into the plug-in extension socket (8) starting from a position that differs from the unequivocal predefined plug-in position, **characterized in that** the plug-in extension (4) can be plugged into the plug-in extension socket (8) in the plug-in direction (14) starting from the unequivocal predefined plug-in position in order to reach a fully plugged-in position and, starting from the fully plugged-in position, can be rotated about the plug-in direction (14) into a final position, wherein, in the final position, the electrical contacts (6) are electrically contacted with the mating electrical contacts (10), wherein at least one receiving channel (22), in which the protrusion (12) is guided during the rotation from the fully plugged-in position into the final position, is arranged in the casing wall in which also the receiving slot (13) is arranged, said receiving channel (22) extending in a circumferential direction (21) and adjoining the receiving slot (13).

2. Plug-in connection (1) according to claim 1, **characterized in that** the shaped part (15) has at least one stop face (17) and the mating shaped part (16) has at least one mating stop face (18), wherein, in order to form the blocking device, the stop face (17) and the mating stop face (18), when the plug-in extension (4) is plugged into the plug-in extension socket (8) in the plug-in direction starting from a position that differs from the unequivocal predefined plug-in position, butt against one another and, in order to prevent the electrical contacting of the electrical contacts (6) with the mating electrical contacts (10), prevent the plug-in extension (4) from being fully plugged into the plug-in extension socket (8) in the plug-in direction (14).

3. Plug-in connection (1) according to claim 1 or 2, **characterized in that** the shaped part (15) is arranged centrally in the plug-in extension interior (7), preferably on a longitudinal central axis (19) of the plug-in extension (4), and/or between the electrical contacts (6).

4. Plug-in connection (1) according to any one of claims 1 to 3, **characterized in that** the mating shaped part (16) is arranged centrally in the plug-in extension socket interior (11), preferably on a longitudinal central axis (20) of the plug-in extension socket (8), and/or between the mating electrical contacts (10).

5. Plug-in connection (1) according to any one of claims 1 to 4, **characterized in that** a plurality of, preferably four, protrusions (12), which are shaped differently from one another and/or are arranged at different positions from one another, are arranged on one casing wall, which is the plug-in extension casing wall (5) or the plug-in extension socket casing wall (9), and the other of said casing walls has a number of receiving slots (13) corresponding to the protrusions (12), said receiving slots being shaped differently from one another and/or being arranged at different positions from one another.

6. Plug-in connection (1) according to any one of claims 1 to 5, **characterized in that** the electrical contacts (6), preferably all the electrical contacts (6), are arranged on a common circular path (23) of the electrical contacts (6), and/or **in that** the mating electrical contacts (10), preferably all the mating electrical contacts, are arranged on a common circular path (24) of the mating electrical contacts (10).

7. Plug-in connection (1) according to any one of claims 1 to 6, **characterized in that** an outer surface (25) of the plug-in extension casing wall (5) and/or an inner surface (26) of the plug-in extension socket casing wall (9) is or are configured in the form of a circular-cylindrical casing at least in some regions, apart from protrusions (12) or receiving slots (13) arranged thereon and/or receiving channels (22) arranged thereon.

8. Plug-in connection (1) according to any one of claims 1 to 7, **characterized in that** one part, which is the shaped part (15) or the mating shaped part (16), has at least one free space (27) which is preferably V-shaped when seen in plan view and into which the other of said parts penetrates when the plug-in extension (4) is plugged into the plug-in extension socket (8) in the plug-in direction (14) starting from the unequivocal predefined plug-in position, wherein it is preferably provided that the part that penetrates into the free space (27) can be rotated in the free space (27) between two rotation stops (28).

## Revendications

1. Raccord enfichable (1) pour la transmission d'un courant électrique, comprenant un connecteur mâle (2) et un connecteur femelle (3), le connecteur mâle (2) étant muni d'un tenon d'enfichage (4) avec une paroi d'enveloppe du tenon d'enfichage (5) et des contacts électriques (6), les contacts électriques (6) étant disposés dans un espace intérieur du tenon d'enfichage (7) entouré par la paroi d'enveloppe du tenon d'enfichage (5), et le connecteur femelle (3) étant muni d'un logement du tenon d'enfichage (8) avec une paroi d'enveloppe du logement du tenon d'enfichage (9) et de contre-contacts électriques (10), les contre-contacts électriques (10) étant disposés dans un espace intérieur du logement du tenon d'enfichage (11) entouré par la paroi d'enveloppe du logement du tenon d'enfichage (9), au moins une saillie (12) étant disposée sur une paroi d'enveloppe, qui est la paroi d'enveloppe du tenon d'enfichage (5) ou la paroi d'enveloppe du logement du tenon d'enfichage (9), et l'autre de ces parois d'enveloppe étant munie d'au moins une fente de réception (13) correspondant à la saillie (12), le tenon d'enfichage (4), dans un état intact de la saillie (12) et de la fente de réception (13), ne pouvant être inséré dans le logement du tenon d'enfichage (8) dans une direction d'enfichage (14) qu'en partant d'une position d'enfichage non ambiguë prédéterminée par la saillie (12) et la fente de réception (13), et le connecteur mâle (2) étant muni en outre d'au moins une partie profilée (15) dans l'espace intérieur du tenon d'enfichage (7) et le connecteur femelle (3) étant muni en outre d'au moins une contrepartie profilée (16) dans l'espace intérieur du logement du tenon d'enfichage (11), la partie profilée (15) et la contrepartie profilée (16) formant ensemble un dispositif de blocage pour empêcher un contact électrique des contacts électriques (6) avec les contre-contacts électriques (10) durant un enfichage du tenon d'enfichage (4) dans le logement du tenon d'enfichage (8) en partant d'une position différente de la position prédéterminée sans ambigüité, **caractérisé en ce que,** en partant de la position d'enfichage sans ambigüité prédéterminée, le tenon d'enfichage (4) peut être enfiché dans le logement du tenon d'enfichage (8) dans la direction enfichable (14) pour atteindre une position complètement enfichée, et, en partant de la position complètement enfichée, il peut être tournée autour de la direction enfichable (14) dans une position finale, les contacts électriques (6), dans la position finale, étant en contact électrique avec les contre-contacts électriques (10), au moins un canal de réception (22), situé à la suite de la fente de réception (13) et s'étendant en direction circonférentielle (21), étant disposé dans la paroi d'enveloppe dans laquelle est également disposée la fente de réception (13), canal dans lequel la saillie (12) est guidée lors de la rotation depuis la position complètement enfichée dans la position finale.

2. Raccord enfichable (1) selon la revendication 1, **caractérisé en ce que** la partie profilée (15) est munie d'au moins une surface de butée (17) et la contrepartie profilée (16) est munie d'au moins une contre-surface de butée (18), la surface de butée (17) et la contre-surface de butée (18), pour former le dispositif de blocage, venant en butée l'une contre l'autre lors de l'enfichage du tenon d'enfichage (4) dans le logement du tenon d'enfichage (8) dans la direction d'enfichage en partant d'une position qui diffère de la position d'enfichage sans ambigüité prédéterminée, et la surface de butée (17) et la contre-surface de butée (18), afin d'empêcher les contacts électriques (6) d'établir un contact électrique avec les contre-contacts électriques (10), empêchant que le tenon d'enfichage (4) ne soit entièrement enfiché dans le logement du tenon d'enfichage (8) dans la direction d'enfichage (14).

3. Raccord enfichable (1) selon la revendication 1 ou 2, **caractérisé en ce que** la partie profilée (15) est disposée au centre dans l'espace intérieur du tenon d'enfichage (7), de préférence sur un axe central longitudinal (19) du tenon d'enfichage (4), et/ou entre les contacts électriques (6).

4. Raccord enfichable (1) selon l'une des revendications 1 à 3, **caractérisé en ce que** la contrepartie profilée (16) est disposée de façon centrée dans l'espace intérieur du logement de tenon d'enfichage (11), de préférence sur un axe central longitudinal (20) du logement du tenon d'enfichage (8), et/ou entre les contre-contacts électriques (10).

5. Raccord enfichable (1) selon l'une des revendications 1 à 4, **caractérisé en ce qu'**une pluralité de saillies (12), de préférence quatre, de formes différentes les unes des autres et/ou disposées en des positions différentes les unes des autres sont disposées sur une paroi d'enveloppe qui est la paroi d'enveloppe du tenon d'enfichage (5) ou la paroi d'enveloppe du logement du tenon d'enfichage (9), et l'autre de ces parois d'enveloppe est munie d'un nombre de fentes de réception (13) correspondant aux saillies (12), lesquelles fentes de réception sont de formes différentes les unes des autres et/ou disposées en des positions différentes les unes des autres.

6. Raccord enfichable (1) selon l'une des revendications 1 à 5, **caractérisé en ce que** les contacts électriques (6), de préférence tous, sont disposés sur un tracé circulaire commun (23) des contacts électriques (6) et/ou **en ce que** les contre-contacts électriques (10), de préférence tous, sont disposés sur un tracé circulaire commun (24) des contre-contacts électriques (10).

7. Raccord enfichable (1) selon l'une des revendications 1 à 6, **caractérisé en ce qu'**une surface extérieure (25) de la paroi d'enveloppe du tenon d'enfichage (5) et/ou une surface intérieure (26) de la paroi d'enveloppe du logement du tenon d'enfichage (9) est ou sont formée(s) au moins par endroit sous la forme d'une enveloppe cylindrique circulaire, à l'exception des saillies (12) ou fentes de réception (13) disposées dessus et/ou des canaux de réception (22) disposés dessus.

8. Raccord enfichable (1) selon l'une des revendications 1 à 7, **caractérisé en ce qu'**une partie, qui est la partie profilée (15) ou la contrepartie profilée (16), est munie d'au moins un espace libre (27), de préférence en forme de V considéré en vue de dessus, espace libre dans lequel pénètre l'autre de ces parties lors de l'enfichage du tenon d'enfichage (4) dans le logement du tenon d'enfichage (8) dans la direction d'enfichage (14) en partant de la position d'enfichage sans ambigüité prédéfinie, la pièce pénétrant dans l'espace libre (27) pouvant de préférence tourner dans l'espace libre (27) entre deux butées de rotation (28).
